# EUROPEAN PATENT SPECIFICATION

(11) **EP 0 377 492 B1**
(45) Date of publication and mention of the grant of the patent: **21.07.1993**
(21) Application number: 90300021.4
(22) Date of filing: 02.01.1990
(51) Int. Cl.: F16D 1/09

(54) **A threaded bush assembly for shaft mount**
Gewindebuchseneinheit für Monatge auf einer Welle
Unité de douille taraudée pour montage sur un arbre

(30) Priority: 05.01.1989 GB 8900171
(43) Date of publication of application: 11.07.1990
(73) Proprietor: J.H. FENNER & CO. LIMITED, Hull North Humberside, HU9 5RA (GB)
(72) Inventor: Rayner, David Antony, Hull North Humberside (GB); Chester, Rodney, Hull North Humberside (GB)
(74) Representative: Ranson, Arthur Terence

(56) References cited:
- WO-A-88/09444
- DE-A- 2 329 940
- DE-A- 2 537 016
- FR-A- 1 097 196
- GB-A- 2 084 293
- GB-A- 2 087 514
- GB-A- 2 137 312
- US-A- 2 709 607
- US-A- 2 819 090
- US-A- 3 638 974
- US-A- 4 514 109

## Description

The present invention relates to a threaded bush assembly for receiving and coupling a shaft within a rotatable hub so as to rotatably couple the shaft to the hub.

The threaded bush assembly may have a broad range of applications and one such application is to permit a shaft mounted speed reducer to receive a driven or output shaft.

In the past it has been know to couple pulleys, sprockets, coupling flanges and other machine elements to cylindrical shafts by means of tapered, split bushes. An example of such a tapered, split bush is disclosed in U.K. Patent No. 592912. Typically though, the length of the shaft received in the pulley hub is relatively short making them unsuitable for applications such as the one identified above of receiving and coupling a shaft within a shaft mounted speed reducer.

U.S. Patent No. 2709607 discloses an elastic bushing for connecting a hub to a shaft and comprises an inner helical spring and an outer helical spring. Both the inner and outer helical springs are of triangular bar section and the pitches of the nesting springs are such that the bars of neither spring will press against the adjacent ones of the other spring over the whole length of the free bushing.

In use, the elastic bushing of U.S. Patent No. 2709607 is compressed axially so that the flattened edges of the triangular cross-sections of the two springs bear against each other. As the elastic bushing is compressed the wall thickness of the bushing increases and this enables a hub to be firmly connected to a shaft.

U.S. Patent No. 4514109 discloses another type of bushing for connecting a hub to a shaft. This bushing uses a coil arrangement having a plurality of turns which is located between an inner rigid element and an outer rigid element. When the coil arrangement is compressed axially relative displacement of the coil turns takes place, either inwardly or outwardly. This has the effect of frictionally binding the outer hub to the inner shaft.

U.K. Patent Application No. 2087514 discloses a coupling device for coupling together the ends of two shafts. The coupling device comprises a sleeve having a screw threaded outer surface and an axially extending slot, and disposed around the sleeve two annular elements each having a screw-threaded bore complimentary to the screw threaded outer surface of the sleeve.

In use the ends of the two shafts to be coupled together are inserted into a respective end of the sleeve so as to meet in the middle thereof and between the annular elements screwed onto the sleeve. Then the two annular elements are caused to move axially relatively away from each other and axially relative to the sleeve. This action radically deforms and compresses the sleeve so that it clamps the ends of the shafts.

U.S. Patent Nos. 2811861, 3590652 and 4452547 each disclose a tapered bush system for receiving and coupling a shaft to the output hub of a shaft mounted speed reducer. These prior patents require the use of two tapered bushes and means for drawing the bushes into engagement with the shaft and the hub on both sides of the hub, so as to accommodate the longer length of the shaft received in the hub. It will be readily apparent that it may not always be convenient or, indeed practicable to gain access to both sides of the hub together to tighten or loosen the bushes and respectively couple or uncouple the shaft to the hub. Furthermore, both bushes must be tightened in general unison and uniformly torqued to predetermined torque levels. It is also a common problem to find on removing the bushes from the shaft that there is a tendency for one bush to resist the removal of the other because the shaft has become frozen to the bushes such that a loosening force on one bush only acts as a tightening force on the other. It will be readily appreciated from the above that the use of these dual tapered bush systems results in extra parts, material, labour and costs, and that these systems are in many instances both inconvenient to install and difficult to remove.

In order to overcome the problems associated with dual tapered bush systems it is known to use single tapered bushes for receiving and coupling a shaft to the output hub of a shaft mounted speed reducer. An example of such a single tapered bush is disclosed in U.S. Patent No. 4626114. However, this particular system suffers from two main disadvantages, one being that the tapered bush can only be fitted from the inboard side of the hub, and the other being that towards the end the walls of the bush are very thin which may lead to problems during manufacture of the bush. In addition, the tapered bush can only be engaged between the hub and the shaft by tightening the bush towards the hub. A further problem of all single, tapered bushes is that the outer tapered surface of the bush contacts the inner tapered surface of the hub over its entire length, thereby increasing the risk of the two surfaces becoming frozen together.

It is an object of the present invention to provide a threaded bush assembly for receiving and coupling a shaft to a rotatable hub which can be fitted from either side of the hub, and which is capable of both push and pull engagement.

It is a further object of the present invention to provide a threaded bush assembly which is relatively easy to tighten and loosen, and which is not prone to freezing.

According to the present invention there is provided a threaded bush assembly for receiving and coupling a shaft to a rotatable hub, comprising a tubular sleeve member which is intended, in use, to be received within the said rotatable hub, a tubular bush member adapted to be received in either end of the sleeve member and comprising a central bore which is intended, in use, to receive the said shaft and means for effecting axial movement of the bush member relative to the sleeve member, characterised in that the internal circumference of the sleeve member and the outer circumference of the bush member each comprise a continuous, helical thread, which in section defines a pair of mutually opposed tapered surfaces, which two threads are screw threadedly engageable, yet define a gap therebetween which enables relative axial movement of the two threads with respect to one another such that upon axial movement of the bush member relative to the sleeve member the tapered surface of one side of a thread is wedged against the tapered surface of the facing side of the other thread.

The sleeve member may be located within and secured to the rotatable hub as a separate component, or it may form an integral part of the rotatable hub.

The bush member may be compressed onto the shaft by the wedging action effected between it and the sleeve member. However, it is preferable to provide an axial split in the bush member which allows the bush member to close about and secure the shaft in its central bore.

Preferably, the threads are of symmetrical triangular section. This ensures that the area of contact between one side of one thread and the opposing side of the other thread is maximised and provides an effective wedge between the sleeve member and the bush member. The symmetrical sections of the two threads enables the bush member to be secured relative to the sleeve member from either side thereof, and further enables the wedging action to be effected whether the bush member is moved axially towards or away from the sthe sleeve member. This is a significant improvement over conventional tapered bush assemblies in which the bush member can only be secured relative to one side of the rotating hub and then only by axially moving the bush member towards the rotating hub. As will be readily appreciated the threaded bush assembly of the present invention is capable of much greater versatility in use than conventional tapered bush assemblies.

To release or loosen the bush member from the sleeve member the two members are simply moved axially relative to one another to de-wedge the threads, and the bush member is then unscrewed from the end of the sleeve member in which it is received.

Preferably, the bush member comprises a flange having a plurality of through holes therein, in each of which is received a screw threaded member. In a first embodiment of the present invention the screw threaded members are each screwed into a respective screw threaded hole in the sleeve member such that as they are tightened they draw the bush member axially towards the sleeve member and thereby effect a wedging action between the threads. Conveniently, the screw threaded holes are provided in a flange member secured to or integral with the sleeve member. In an alternative embodiment the through holes in the flange carried by the bush member are tapped and the screw threaded members are threadedly received in these. As the screw threaded members are screwed into these holes the ends thereof abut against the end of the sleeve member and effect a "jacking", action which causes the bush member to be pushed away from the sleeve member. Again this effects a wedging action between the two threads.

Embodiments of the present invention will now be described, by way of example, with reference to the accompanying drawings, in which:
Fig. 1 shows a part section of a shaft mounted speed reducer comprising a first embodiment of a threaded bush system in accordance with the present invention;
Fig. 2 shows an exploded view of the threaded bush system of Fig. 1;
Fig. 3 shows an enlarged view of a section of the engaging surfaces of the bush and sleeve of the threaded bush system according to the present invention, and illustrates how relative movement of these two components brings about engagement and disengagement thereof;
Fig. 4 shows a part section of a shaft mounted speed reducer comprising a second embodiment of a threaded bush system in accordance with the present invention; and,
Fig. 5 shows an exploded view of the threaded bush system of Fig. 2.

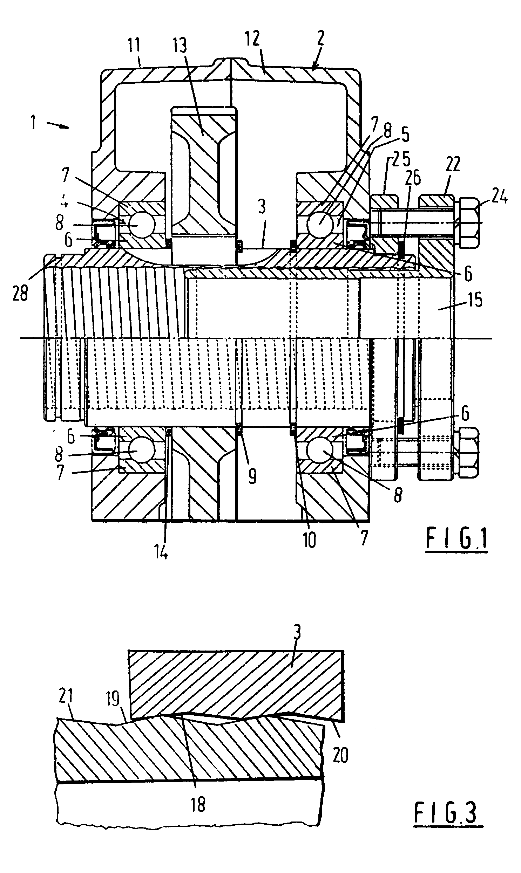

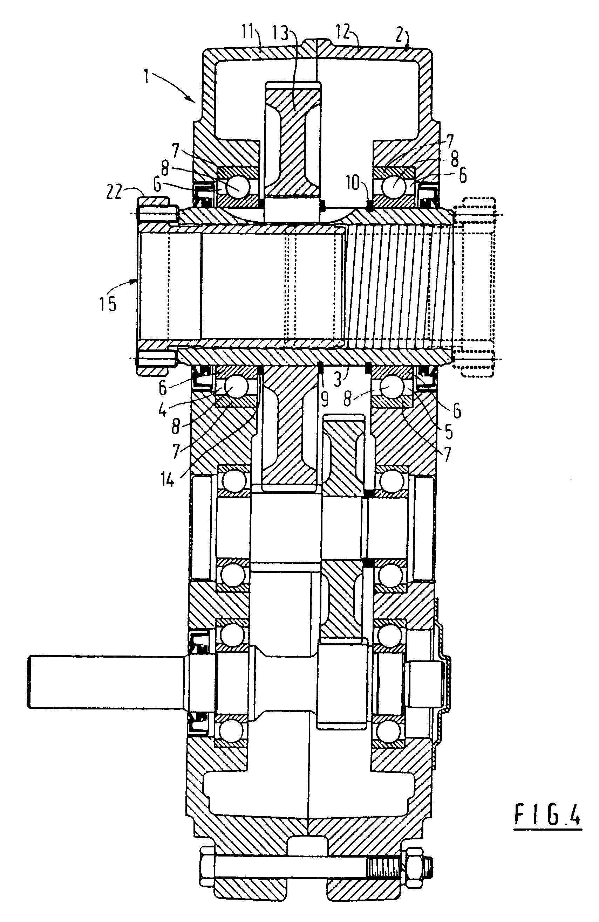

Referring to Fig. 1 of the accompanying drawings there is shown a part section of a shaft mounted speed reducer, generally indicated by reference 1. The speed reducer comprises a housing 2 and a power output hub or sleeve 3 which is mounted for rotation in the housing 2 in a pair of anti-friction roller bearings 4 and 5. Each of these bearings 4 and 5 is essentially identical and each comprises an inner race 6 which is carried by and secured to the output hub 3, and an outer race 7 which is received in and secured to an appropriate recess in the housing 2. A plurality of roller elements 8 are provided between the inner race 6 and the outer race 7 such that the output hub 3 is free to rotate relative to the housing 2. The output hub 3 is axially fixed within the housing 2 by means of retaining rings or circlips 9 and 10 which are each received in a respective groove in the output hub 3. Housing 2 is in two parts, 11 and 12, which are bolted together by bolts (not shown).

An output gear 13 is mounted on and secured to the output hub 3 between circlip 9 and an additional circlip 14 which is also received in a respective groove in the output hub 3. As is conventional, the output gear forms part of a speed reducing gear chain (not shown) which is connected to a power input shaft (also not shown). The speed reducing gear chain is journal for rotation within the housing 2 such that the input shaft drives the output hub 3 at a predetermined reduced speed with a consequent increase in output torque. The power input shaft is connected to the drive shaft of an electric motor or other prime mover (not shown) by any of several well known means.

As is conventional, the output hub 3 receives and is coupled to a driven shaft (not shown) of a particular application to be driven by the above noted prime mover. The driven shaft is secured to the output hub 3 by means of a single piece bush 15 as will now be described.

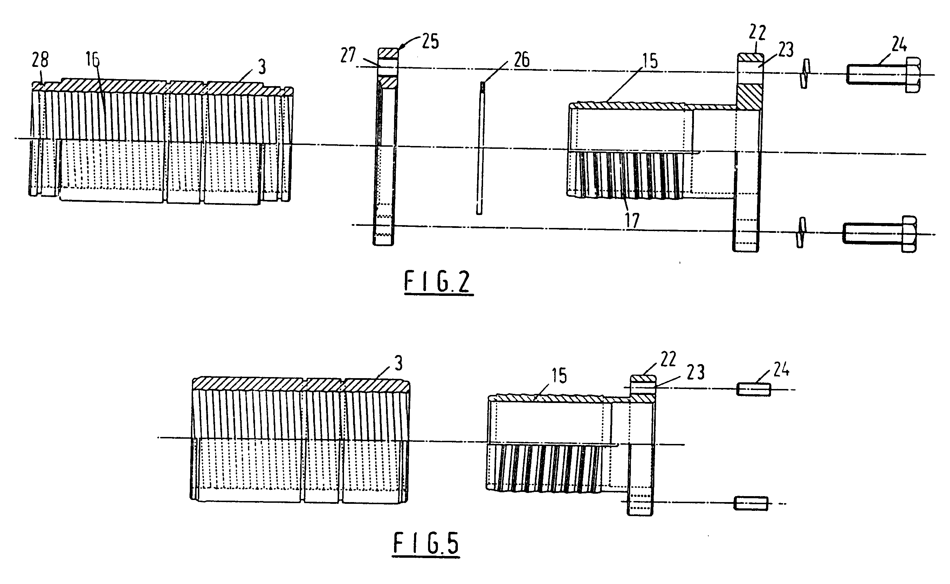

Referring now to Figs. 2 and 3 in combination with Fig. 1, it will be seen that a continuous helical thread, indicated generally by reference 16, has been cut in the inner circumference of the output hub 3. An enlarged detail of the profile of this thread 16 can be seen in Fig. 3 and it is to be noted that it is essentially triangular and symmetrical. In this particular instance the pitch of the threads is 8mm and each side of each thread is inclined at an angle of 10 degrees. The bush 15 is inserted or, more specifically, screwed into the output hub 3 and in this respect it will be seen that a thread, indicated generally by reference 17 and matching thread 16 in the output hub 15, has been cut in the outer surface of the bush 3.

Referring again to Fig. 3 it will be seen that though the threads 16 and 17 are identical, the inner diameter of the outer hub 3 is slightly greater than the outer diameter of the bush 15, such that the threads are able to move axially with respect to each other. Now, by sliding the bush 15 axially relative to the output hub 3 the opposing surfaces 18 and 19 of each thread 16 and 17 are brought into engagement and wedged together. This wedging action secures the outer hub 3 to the bush 15.

It should be apparent that the symmetrical profile of the threads 16 and 17 enables the bush 15 to be screwed into the output hub 3 from either side of the output hub 3, and further, that the bush 15 can be secured relative to output hub 3 by relative axial movement of the bush 15 either into or out of the output hub 3. Where the bush 15 is moved axially out of the output hub 3 opposing surfaces 20 and 21 of the threads are brought into engagement and wedged together. This is a significant advantage over conventional tapered bush assemblies in which the bush member can only be secured on one side of the hub member and then only by pushing the bush member into the hub member. As will be readily understood the threaded bush assembly of the present invention is capable of much greater versatility in use than conventional tapered bush assemblies.

An integral flange 22 is provided at one end of the bush 15 and a plurality of through holes 23 are provided in this flange 22, in each of which is received a threaded fastener or bolt 24. A collar 25 is carried by and secured to the end of the output hub 3 in which the bush 15 is to be received. Axially movement of the collar 25 restricted by means of a circlip 26 and a plurality of threaded holes 27, corresponding in position to the through holes 23 in the flange 22, are provided therein. Each bolt 24 is screwed into a respective one of the threaded holes 27 in the collar 25 such that upon tightening the bolts 24 in a generally uniform manner the bush 15 is forced axially into the output hub 3 bringing the opposed surfaces 18 and 19 of the threads 16 and 17 into face to face engagement.

In order that the bush 15 may be inserted from the other side of the output hub 3, the opposite end of the output hub 3 is profiled to receive the collar 25 and a groove 28 is provided to receive the circlip 26 which secures the collar 25 in place. To facilitate axial movement and locking of the bush 15 to the output hub 3 when the bush 15 is moved away from the output hub 3 a locking nut may be provided on each bolt 24 which can be tightened against the surface of the collar 25 or the flange 22 once the bolt 24 is suitably engaged in the screw threaded hole in the collar 25.

Referring now to Figs. 4 and 5 of the accompanying drawings there is shown an alternative embodiment of the threaded bush assembly according to the present invention. In this Figure the speed reducer one has been shown in full, though because it is of essentially conventional design a detail description of it is not considered necessary here. For the avoidance of doubt and the sake of simplicity the same references have been used to denote components which are common to this embodiment of Figs. 1 to 3.

The embodiment of Figs. 4 and 5 differs from that of Figs. 1 to 3 in that the collar 25 has been dispensed with and the through holes (23) in the flange 22 carried by the bush 15 are tapped so as each to threadedly receive a screw threaded member 24 in the form of a grub screw. As the grub screws 24 are screwed into the screw threaded holes (23) in the flange 22 the ends thereof abut against the facing surface of the output hub 3 and effect a "jacking" action which causes the bush member 15 to move axially out of the output hub 3. Of course, this axial movement gives rise to a wedging action between the two threads of the bush member and the output hub 3, which in turn compress the bush member onto the shaft and locks the bush assembly together.

It may be considered desirable to provide an axial split in the bush member to facilitate compression of this onto the shaft. In this respect, as the bush member is compressed within the sleeve member the split allows it to close about the shaft.

It has been found that a suitable angle of inclination for the tapered surfaces of the thread is 10 degrees. This effects a suitable torque carrying capacity for most loads. However, if the angle of inclination is reduced, the degree of locking is increased and the torque carrying capacity is greatly increased, though greater care must be exercised in machining the threads and the assembly is more likely to freeze.

## Claims

1. A threaded bush assembly for receiving and coupling a shaft to a rotatable hub, comprising a tubular sleeve member (3) which is intended, in use, to be received within the said rotatable hub, a tubular bush member (15) adapted to be received in either end of the sleeve member (3) and comprising a central bore which is intended, in use, to receive the said shaft and means (25, 22, 24) for effecting axial movement of the bush member (15) relative to the sleeve member (3), characterised in that the internal circumference of the sleeve member (3) and the outer circumference of the bush member (15) each comprise a continuous, helical thread (16, 17) which in section defines a pair of mutually opposed tapered surfaces (18, 19), which two threads are screw threadedly engageable, yet define a gap therebetween which enables relative axial movement of the two threads (16, 17) with respect to one another such that upon axial movement of the bush member (15) relative to the sleeve member (3) the tapered surface (18, 19) of one side of a thread (16, 17) is wedged against the tapered surface (18, 19) of the facing side of the other thread (16, 17).

2. A threaded bush assembly according to claim 1, characterised in that the sleeve member (3) is located within and secured to the rotatable hub as a separate component.

3. A threaded bush assembly according to claim 1, characterised in that the sleeve member (3) forms an integral part of the rotatable hub.

4. A threaded bush assembly according to claim 1, 2 or 3, characterised in that there is provided an axial split in the bush member (15) which allows the bush member (15) to close about and secure the shaft in its central bore.

5. A threaded bush assembly according to any preceding claim characterised in that the threads (16,17) are of symmetrical triangular section.

6. A threaded bush assembly according to any preceding claim, characterised in that the bush member (15) comprises a flange (22) having a plurality of through holes (23) therein, in each of which is received a screw threaded member (24), each of which is screwed into a respective screw threaded hole in, or in a collar carried by the sleeve member (3) such that as they are tightened they draw the bush member (15) axially towards the sleeve member (3) and thereby effect a wedging action between the threads (16,17).

7. A threaded bush assembly according to any one of claims 1 to 5, characterised in that the bush member (15) comprises a flange (22) having a pluarlity of tapped holes (23) therein, in each of which is received a screw threaded member (24), each of which abuts against the facing end of the sleeve member (3) and effects a "jacking" action which causes the bush member (15) to be pushed away from the sleeve member (3), thereby effecting a wedging action between the two threads (16,17).

## Patentansprüche

1. Eine Gewindebuchseneinheit zum Aufnehmen und Verbinden einer Welle mit einer drehbaren Nabe, umfassend ein rohrförmiges Hülsenelement (3), das bei Gebrauch in der genannten drehbaren Nabe aufgenommen wird, ein rohrförmiges Buchsenelement (15) zur Aufnahme in einem der Enden des Hülsenelementes (3), wobei das Hülsenelement eine mittlere Bohrung aufweist, die bei Gebrauch die genannte Welle aufnimmt, sowie Mittel (25, 22, 24) zur Bewirkung einer Axialbewegung des Buchsenelementes (15) relativ zu dem Hülsenelement (3), dadurch gekennzeichnet, daß der Innenumfang des Hülsenelementes (3) und der Außenumfang des Buchsenelementes (15) jeweils ein kontinuierliches Schraubgewinde (16, 17) aufweisen, die abschnittsweise ein Paar einander gegenüberliegender, sich verjüngender Flächen (18, 19) definieren, wobei die beiden Gewinde schraubend ineinandergreifen, jedoch einen Spalt zwischen sich begrenzen, der eine relative Axialbewegung der beiden Gewinde (16, 17) zueinander ermöglichen, so daß nach der Axialbewegung des Buchsenelementes (15) relativ zu dem Hülsenelement (3) die sich verjüngende Fläche (18, 19) einer Seite eines Gewindes (16, 17) mit der sich verjüngenden Fläche (18, 19) der dieser zugewandten Seite des anderen Gewindes (16, 17) verkeilt wird.

2. Gewindebuchseneinheit nach Anspruch 1, dadurch gekennzeichnet, daß sich das Hülsenelement (3) innerhalb der drehbaren Nabe befindet und als separates Teil an dieser befestigt wird.

3. Gewindebuchseneinheit nach Anspruch 1, dadurch gekennzeichnet, daß das Hülsenelement (3) einen festen Bestandteil der drehbaren Nabe bildet.

4. Gewindebuchseneinheit nach Anspruch 1, 2 oder 3, dadurch gekennzeichnet, daß in dem Buchsenelement (15) eine axiale Spaltung vorgesehen ist, um die herum das Buchsenelement (15) schließen und die Welle in ihrer Mittelbohrung befestigen kann.

5. Gewindebuchseneinheit nach einem der vorhergehenden Ansprüche, dadurch gekennzeichnet, daß die Gewinde (16, 17) einen symmetrischen, dreieckigen Querschnitt aufweisen.

6. Gewindebuchseneinheit nach einem der vorhergehenden Ansprüche, dadurch gekennzeichnet, daß das Buchsenelement (15) einen Flansch mit einer Mehrzahl von durchgehenden Öffnungen (23) darin aufweist, wobei jede dieser Öffnungen (23) ein Schraubgewindeelement (24) aufnimmt, die jeweils in eine Schraubgewindeöffnung im Hülsenelement (3) oder in einen auf dem Hülsenelement (3) befindlichen Ansatz eingeschraubt werden, so daß sie beim Festziehen das Buchsenelement (15) axial zu dem Hülsenelement (3) hinziehen und auf diese Weise eine Keilwirkung zwischen den Gewinden (16, 17) erzielen.

7. Gewindebuchseneinheit nach einem der vorhergehenden Ansprüche 1 bis 5, dadurch gekennzeichnet, daß das Buchsenelement (15) einen Flansch (22) mit einer Mehrzahl von Öffnungen (23) mit Innengewinde aufweist, wobei jede der Öffnungen (23) ein Schraubgewindeelement (24) aufnimmt, die jeweils an dem zugewandten Ende des Hülsenelementes (3) anliegen und einen Hebeeffekt bewirken, der ein Wegschieben des Buchsenelementes (15) von dem Hülsenelement (3) verursacht, wodurch eine Keilwirkung zwischen den beiden Gewinden (16, 17) erzielt wird.

## Revendications

1. Ensemble à bague filetée destiné à recevoir un arbre et l'accoupler à un moyeu tournant, comprenant un élément manchon tubulaire (3) destiné, en usage, à être reçu dans le moyeu tournant, un élément bague tubulaire (15) fait pour être reçu dans l'une ou l'autre extrémité de l'élément manchon (3) et présentant un alésage central destiné, en usage, à recevoir l'arbre, et des moyens (25, 22, 24) pour la production d'un mouvement axial de l'élément bague (15) par rapport à l'élément manchon (3), caractérisé par le fait que la circonférence intérieure de l'élément manchon (3) et la circonférence extérieure de l'élément bague (15) présentent chacune un filetage hélicoïdal continu (16, 17) qui détermine en section deux surfaces coniques opposées (18, 19), les deux filetages (16, 17) pouvant être mis en prise mutuelle, mais déterminant entre eux un intervalle qui permet un mouvement axial relatif entre eux de façon que, lors d'un mouvement axial de l'élément bague (15) par rapport à l'élément manchon (3), la surface conique (18, 19) d'un côté d'un filetage (16, 17) se coince contre la surface conique (18, 19) du côté en regard de l'autre filetage (16, 17).

2. Ensemble à bague filetée selon la revendication 1, caractérisé par le fait que l'élément manchon (3) est placé à l'intérieur du moyeu tournant et fixé à celui-ci comme élément séparé.

3. Ensemble à bague filetée selon la revendication 1, caractérisé par le fait que l'élément manchon (3) fait partie intégrante du moyeu tournant.

4. Ensemble à bague filetée selon l'une des revendications 1 à 3, caractérisé par le fait que l'élément bague (15) est pourvu d'une fente axiale qui lui permet de se fermer autour de l'arbre et de fixer celui-ci dans son alésage central.

5. Ensemble à bague filetée selon l'une des revendications précédentes, caractérisé par le fait que les filetages (16, 17) sont de section triangulaire symétrique.

6. Ensemble à bague filetée selon l'une des revendications précédentes, caractérisé par le fait que l'élément bague (15) comprend une bride (22) percée d'une série de trous débouchants (23) qui reçoivent chacun un élément fileté (24), chacun d'eux étant vissé dans un trou taraudé, ou dans un collier porté par l'élément manchon (3) de façon que, lorsqu'on serre les éléments filetés (24), ils tirent l'élément bague (15) axialement vers l'élément manchon (3) et produisent par là un coincement entre les filetages (16, 17).

7. Ensemble à bague filetée selon l'une des revendications 1 à 5, caractérisé par le fait que l'élément bague (15) comprend une bride (22) ayant une série de trous taraudés (23) qui reçoivent chacun un élément fileté (24) qui bute contre l'extrémité en regard de l'élément manchon (3) et produit un effet de vérin provoquant un écartement de l'élément bague (15) par rapport à l'élément manchon (3) et par là un coincement entre les deux filetages (16, 17).
